# FASCICULE DE BREVET EUROPEEN

(11) **EP 0 546 608 B1**
(45) Date de publication et mention de la délivrance du brevet: **02.06.1999**
(21) Numéro de dépôt: 92203698.3
(22) Date de dépôt: 01.12.1992
(51) Int. Cl.: C08L 81/02

(54) **Compositions à base de polysulfure de phénylène de résistance au choc améliorée et procédé pour les préparer**
Mischung auf Basis von Polyphenylensulfid mit verbesserter Schlagzähigkeit und Herstellungsverfahren
Compositions based on polyarylenesulphide with improved impact strength and process for their preparation

(30) Priorité: 13.12.1991 BE 9101135
(43) Date de publication de la demande: 16.06.1993
(73) Titulaire: SOLVAY (Société Anonyme), B-1050 Bruxelles (BE)
(72) Inventeur: Lambla, Morand, F-67800 Hoenheim (FR); Mestanza, Raphael, F-67300 Schiltigheim (FR); Lin, Dar-Jong, Nan-Ta Road, Iisin-Chu 30033 (TW); Vandevijver, Eric, B-1200 Bruxelles (BE); Collard, Marie-Paule, B-1800 Vilvoorde (BE)
(74) Mandataire: Eischen, Roland

(56) Documents cités:
- EP-A- 0 345 094
- EP-A- 0 360 544
- EP-A- 0 438 777
- EP-A- 0 446 445
- DATABASE WPIL Week 8733, 14 Octobre 1987 Derwent Publications Ltd., London, GB; AN 87-230839
- CHEMICAL ABSTRACTS, vol. 106, no. 14, 6 Avril 1987, Columbus, Ohio, US; abstract no. 103261, 'polythioarylene composition' page 42 ;colonne 1 ;

## Description

La présente invention concerne des compositions à base de polysulfure de phénylène de résistance au choc améliorée. Elle concerne plus précisément des compositions contenant un polysulfure de phénylène et un produit résultant de la réticulation d'un élastomère oléfinique contenant des groupes époxy. Elle concerne aussi un procédé pour préparer ces compositions.

Le poly(sulfure de phénylène)(dénommé ci-après brièvement PPS) présente une excellente stabilité thermique et une très bonne résistance chimique qui en font un matériau de choix pour le moulage de pièces utilisables notamment dans des applications électriques et électroniques et dans l'industrie automobile.

Le PPS présente toutefois l'inconvénient de posséder une faible résistance au choc et donc d'être cassant.

On a déjà tenté de remédier à cet inconvénient en incorporant dans le PPS des copolymères élastomériques dérivés d'oléfines et d'esters glycidyliques d'acides carboxyliques alpha-bêta insaturés (demande de brevet japonais publiée sous le numéro 58-154757(1983)(TORAY INDUSTRIES)). La réactivité insuffisante des chaînes moléculaires du PPS vis-à-vis du copolymère élastomérique a toutefois comme conséquence que la cohésion interfaciale entre la phase élastomérique dispersée et la phase continue contenant le PPS est médiocre et que l'amélioration de la résistance au choc du PPS reste insuffisante. On a dès lors tenté d'augmenter l'affinité chimique du PPS vis-à-vis du copolymère élastomérique en soumettant préalablement le PPS à un traitement au moyen d'acide et/ou d'eau chaude (brevet US-A-4 889 893 (TORAY INDUSTRIES)). La morphologie et l'ouvrabilité des compositions obtenues n'est toutefois pas satisfaisante.

La demande de brevet FR-A-2 617 176 (SOCIETE CHIMIQUE DES CHARBONNAGES) décrit des compositions contenant un matériau qui peut être un polysulfure d'arylène et qui est renforcé au choc par addition d'un copolymère comprenant des motifs dérivés de l'éthylène, des motifs dérivés d'au moins un ester aliphatique d'un acide carboxylique α,β-insaturé et des motifs dérivés de l'anhydride maléique. Les compositions peuvent aussi contenir un agent chimique capable de réticuler le copolymère, incorporé au moment du malaxage des autres constituants de la composition. La morphologie des compositions obtenues n'est pas satisfaisante non plus.

On a aussi proposé d'améliorer la cohésion entre la phase continue contenant le PPS et la phase dispersée contenant l'élastomère en malaxant préalablement le PPS en fondu avec un isocyanate polyfonctionnel (4-4'-diphényl méthane diisocyanate) (demande de brevet EF-A-0 406 553 (ASAHI KASEI)). La composition obtenue contient des liens thiouréthanes qui nuisent à sa stabilité.

Dans la demande de brevet EP-A-0360544 (UBE INDUSTRIES), on a décrit des compositions thermoplastiques comprenant du PPS et un copolymère vinylique contenant des groupes époxy et qui peuvent également contenir un copolymère du styrène modifié par des groupes anhydride d'acide carboxylique.

Les propriétés mécaniques et thermiques et l'ouvrabilité de ces compositions ne sont toutefois effectivement améliorées que lorsqu'elles contiennent en outre un polyphénylèneéther.

Dans la demande de brevet EP-A-0345094, on décrit des compositions thermoplastiques comprenant du PPS, un polymère oléfinique contenant des groupements époxy, et au moins un élastomère. Cet élastomère est choisi parmi les éthylène/propylène, les copolymères éthylène/butène, les copolymères éthylène/propylène/diène, les copolymères à blocs styrène/butadiène/styrène hydrogénés et les polyamides élastomériques. L'élastomère peut également être choisi parmi les copolymères de l'éthylène avec un monomère choisi parmi l'acide acrylique, l'acide méthacrylique, les esters d'alkyle et leurs sels métalliques.

On a maintenant trouvé que la résistance au choc de compositions contenant du PPS peut être améliorée en y incorporant un élastomère réticulé particulier, par une méthode particulière qui permet de le disperser de manière homogène dans la matrice de PPS, sans nuire aux autres propriétés de ce dernier.

La présente invention concerne dès lors, à titre principal, des compositions à base de polysulfure de phénylène contenant essentiellement 60 à 99,5 % en poids de polysulfure de phénylène et 0,5 à 40 % en poids d'une combinaison (C) contenant un copolymère élastomérique (C1) dérivé d'au moins une oléfine, d'au moins un comonomère (1) contenant au moins un groupe époxy et au moins un radical éthyléniquement insaturé, ainsi que d'un autre comonomère insaturé (2) copolymérisable avec les oléfines, qui est un alkylester d'acide carboxylique α,β-insaturé; et un agent de réticulation (C2) choisi parmi les copolymères d'oléfine, d'au moins un comonomère (3) choisi parmi les anhydrides dérivés des acides carboxyliques insaturés, et d'au moins un autre comonomère insaturé (2') choisi parmi les alkylesters d'acides carboxyliques α,β-insaturés, la quantité de composé (C2) étant suffisante pour réaliser une réticulation au moins partielle du composé (C1).

Le polysulfure de phénylène (PPS) contenu dans les compositions selon l'invention est un polymère comprenant au moins 70 % molaires, de préférence au moins 90 % molaires d'unités récurrentes de p-sulfure de phénylène de formule

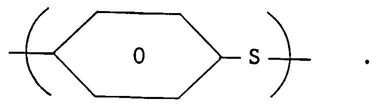

Les PPS contenant au moins 70 % molaires d'unités récurrentes de p-sulfure de phénylène confèrent aux compositions selon l'invention une stabilité thermique et une résistance chimique suffisantes. 30 % molaires ou moins des unités récurrentes contenues dans le PPS peuvent être choisies parmi celles présentant les formules de structure ci-après :

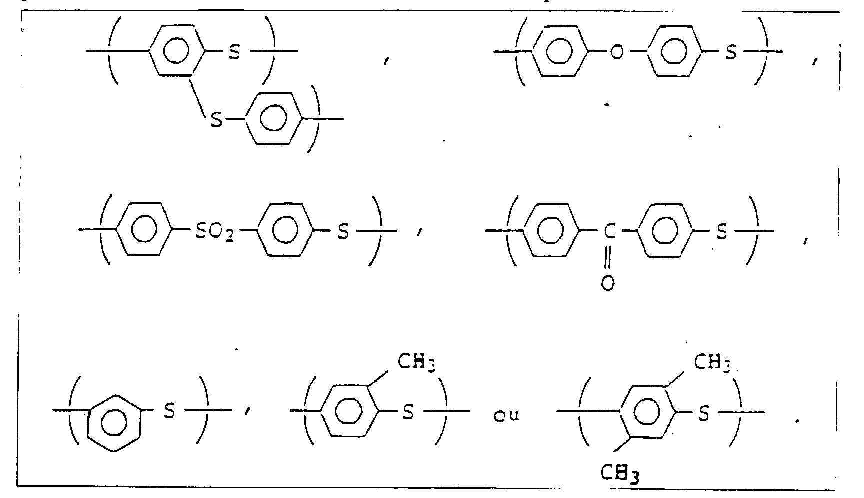

Les procédés de fabrication des PPS utilisables selon l'invention sont bien connus. Ils peuvent tous être utilisés. Un procédé comprend le chauffage d'un sulfure de métal alcalin, le plus souvent du sulfure de sodium hydraté, dans un solvant polaire pour en éliminer l'eau d'hydratation, suivi de l'addition d'un composé aromatique dihalogéné, en particulier le p-dichlorobenzène, et de la polymérisation à température plus élevée (voir par exemple brevet US-A-3 354 129 (PHILLIPS PETROLEUM)). Le poids moléculaire du PPS obtenu peut être augmenté de manière connue par post-traitement oxydatif conduisant à des produits ramifiés ou par addition d'agents connus d'augmentation du poids moléculaire (eau, esters, anhydrides, carboxylates et sulfonates de métaux alcalins...) au milieu de polycondensation, conduisant à des produits linéaires à haut poids moléculaire.

Le poids moléculaire du PPS utilisable selon l'invention peut varier dans de larges mesures. Il est généralement tel que l'indice de fluidité du PPS est compris entre 5 g/10 min et 10 000 g/10 min, de préférence entre 10 g/10 min et 500 g/10 min (déterminé selon la norme ASTM D 1238-74 T, à une température de 315°C, sous une charge de 5 kg).

Le PPS utilisable selon l'invention peut contenir des additifs conventionnels dans des quantités qui ne sont pas préjudiciables aux propriétés des compositions selon l'invention. A titre de pareils additifs, on peut citer notamment : les antioxydants et les stabilisants thermiques, tels que par exemple les phénols empêchés, les thioesters et les phosphites ; les agents anti-UV, tels que par exemple le résorcinol, le benzotriazole et la benzophénone ; les agents ignifugeants, tels que par exemple les sels d'antimoine, les chlorophosphates d'aryle et les paraffines chlorées ; les agents antistatiques, tels que par exemple le dodécylbenzènesulfonate et les polyalkylèneglycols ; les lubrifiants, tels que par exemple le graphite, le bisulfure de molybdène et les silicones ; les agents anti-corrosion, tels que par exemple les carbonates de métaux alcalins ; les pigments, tels que par exemple le dioxyde de titane et le sulfure de zinc ; les agents de mise en oeuvre, tels que par exemple les esters aromatiques de l'acide phosphorique et le microtalc ; les agents de contrôle du degré de réticulation, tels que par exemple les peroxydes ; les accélérateurs de réticulation, tels que par exemple les sels métalliques d'acide thiophosphinique ; les inhibiteurs de réticulation, tels que par exemple les dicarboxylates de dialkylétain ou l'aminotriazole ; etc.

On peut aussi ajouter au PPS de petites quantités d'autres polymères.

Le PPS utilisable selon l'invention peut aussi être traité, pour améliorer son affinité avec le composé (C1) défini plus loin, par un acide, de l'eau chaude, et/ou un solvant organique. Des détails relatifs à ce traitement, connu de l'homme du métier, peuvent être trouvés dans le brevet US-A-4 889 893 (TORAY INDUSTRIES).

Les compositions selon l'invention sont obtenues en faisant intervenir une combinaison (C) contenant un composé (C1) et un composé (C2).

Les oléfines dont dérivent ces copolymères peuvent être des α-monooléfines ou des dioléfines contenant des doubles liaisons conjuguées.

Des exemples spécifiques d'α-monooléfines sont l'éthylène, le propylène, le n-butène-1, l'isobutylène, etc. L'éthylène est préféré à titre d'α-monooléfine.

Des exemples spécifiques de dioléfines contenant des doubles liaisons conjuguées sont le 1,3-butadiène, le 2-méthyl-1,3-butadiène, le 2,3-diméthyl-1,3-butadiène, le chloroprène, le 1,3-pentadiène, le 1,3-hexadiène, etc.

Le 1,3-butadiène est préféré à titre de dioléfine contenant des doubles liaisons conjuguées.

L'utilisation de plusieurs oléfines différentes pour préparer le composé (C1) entre également dans le cadre de l'invention.

Les comonomères (1) dont dérivent les copolymères élastomériques (composé (C1)) peuvent être choisis parmi les esters glycidyliques d'acides carboxyliques α,β-insaturés répondant à la formule générale 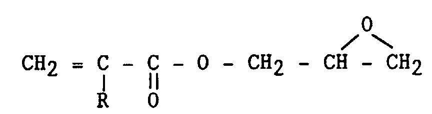 dans laquelle R est un atome d'hydrogène ou un radical alkyle en C₁₋₈.

Des exemples spécifiques d'esters glycidyliques d'acides carboxyliques α,β-insaturés sont l'acrylate de glycidyle, le méthacrylate de glycidyle, l'α-éthylacrylate de glycidyle, l'itaconate de glycidyle, etc.

Les comonomères (1) peuvent aussi être choisis parmi les éthers glycidyliques comportant une insaturation éthylénique, tels que l'éther allyl glycidylique, l'éther 2-méthylallylglycidylique et l'éther styrène-p-glycidylique par exemple, ou parmi d'autres monomères contenant un groupe époxy et un radical éthyléniquement insaturé, tels que le 3,4-époxybutène, le 3,4-époxy-3-méthyl-1-butène, le 3,4-époxy-1-pentène, le 3,4-époxy-3-méthyl-1-pentène et le 5,6-époxy-1-hexène, par exemple.

Les esters glycidyliques d'acides carboxyliques α,β-insaturés sont préférés à titre de comonomère (1), et, parmi eux, tout particulièrement le méthacrylate de glycidyle.

Des exemples d'alkylesters d'acides carboxyliques α,β-insaturés utilisables comme autre comonomère insaturé (2) sont l'acrylate et le méthacrylate de méthyle, l'acrylate et le méthacrylate d'éthyle, l'acrylate et le méthacrylate de n-propyle, l'acrylate et le méthacrylate d'isopropyle, l'acrylate et le méthacrylate de n-butyle, d'isobutyle et de t-butyle.

Parmi les alkylesters d'acides carboxyliques α,β-insaturés, l'acrylate d'éthyle est tout particulièrement préféré à titre de comonomère (2).

Les composés (C1) peuvent être obtenus de manière connue par copolymérisation des monomères correspondants, par exemple, par copolymérisation radicalaire à haute pression des monomères correspondants.

La quantité d'oléfine présente dans les composés (C1) est généralement comprise entre 50 et 90 % en poids, de préférence entre 55 et 85 % en poids du composé (C1).

La quantité de comonomère (1) présent dans les composés (C1) est généralement comprise entre 0,1 et 40 % en poids, de préférence entre 0,5 et 30 % en poids du composé (C1). Le comonomère (2) représente au moins 0,5 % en poids, de préférence entre 5 et 45 % en poids du composé (C1).

Des quantités de monomère(s) (1) (et (2)) trop faibles ne permettent pas d'obtenir les effets désirés et des quantités de monomère(s) (1) (et (2)) trop élevées entraînent la formation de gels au malaxage et une détérioration de la moulabilité des compositions selon l'invention.

Des composés (C1) particulièrement préférés contiennent de 60 à 80 % en poids d'éthylène à titre d'a-monooléfine, de 1 à 15 % en poids de (méth)acrylate de glycidyle à titre de comonomère (1) et au moins 15 % en poids d'acrylate d'alkyle en C₁₋₄ à titre de comonomère (2).

Le composé (C2) utilisable dans les compositions selon l'invention est un agent de réticulation contenant des groupes fonctionnels réactifs vis-à-vis des groupes époxy du composé (C1) choisi parmi les copolymères d'oléfine, d'au moins un comonomère (3) choisi parmi les anhydrides dérivés des acides carboxyliques insaturés, et d'au moins un autre comonomère insaturé (2') choisi parmi les alkylesters d'acides carboxyliques α,β-insaturés.

Les oléfines dont dérivent les copolymères ci-dessus répondent aux mêmes définitions et limitations que les oléfines dont dérivent les composés (C1). Parmi les oléfines, les α-monooléfines sont préférées et, parmi ces dernières, l'éthylène convient particulièrement bien.

Des exemples spécifiques d'anhydrides dérivés des acides carboxyliques insaturés sont l'anhydride maléique et l'anhydride itaconique. L'anhydride maléique est tout particulièrement préféré à titre de comonomère (3).

Outre les oléfines et les comonomères (3), les composés (C2) contiennent au moins un autre comonomère insaturé (2'). Ce comonomère insaturé (2') répond aux mêmes définitions et limitations que le comonomère (2) pouvant entrer dans la composition des composés (C1).

La quantité d'oléfine présente dans les copolymères d'oléfines et d'au moins un comonomère (3) définis ci-dessus, utilisables comme composés (C2), est généralement comprise entre 50 et 98 % en poids, de préférence entre 60 et 95 % en poids du copolymère.

La quantité de comonomère (3) présente dans ces copolymères est généralement comprise entre 0,1 et 30 % en poids, de préférence entre 0,2 et 20 % en poids du copolymère. Le comonomère insaturé (2') représente au moins 0,5 % en poids, de préférence entre 2 et 35 % en poids du copolymère.

Les copolymères d'oléfines du comonomère (3) et du comonomère (2') peuvent être obtenus de manière connue par copolymérisation radicalaire à haute pression des monomères correspondants.

Des exemples spécifiques des composés (C2) sont, les copolymères éthylène/acrylate d'éthyle/anhydride maléique, les copolymères éthylène/acrylate de butyle/anhydride maléique, et les copolymères éthylène/méthacrylate de méthyle/anhydride maléique.

Les quantités respectives de composés (C1) et (C2) présentes dans la combinaison (C) ne sont pas critiques pour autant que la quantité de composé (C2) soit suffisante pour réaliser une réticulation au moins partielle du composé (C1), c'est-à-dire un pontage entre les groupes époxy des macromolécules du composé (C1). Les quantités de composés (C1) et (C2) sont généralement choisies de manière à ce que le rapport molaire
(groupes époxy du composé (C1))/(fonctions du composé (C2) susceptibles de réagir avec les groupes époxy du composé (C1)) soit compris entre 0,1 et 10.

De bons résultats sont obtenus lorsque ce rapport est compris entre 0,2 et 5.

Certaines au moins des compositions à base de PPS de l'invention contiennent un produit de réticulation particulier que ne contiennent pas les compositions appartenant à l'art antérieur. Ces compositions, qui constituent un objet particulier de la présente invention, comprennent 60 à 99,5 % en poids, de préférence 70 à 95 % en poids, d'une matrice (phase continue) de PPS et 0,5 à 40% en poids, de préférence 5 à 30 % en poids, d'une phase dispersée d'une combinaison (C) contenant le produit de la réticulation d'un composé élastomérique (C1) contenant de 60 à 80 % en poids d'éthylène, de 1 à 15 % en poids de (méth)acrylate de glycidyle et au moins 15 % en poids d'acrylate d'alkyle en C₁₋₄ par un composé (C2) contenant de 65 à 95 % en poids d'éthylène, de 0,5 à 10 % en poids d'anhydride maléique et de 3 à 30 % en poids d'acrylate d'alkyle en C₁₋₄, les composés (C1) et (C2) ayant été mis en contact au rapport molaire
(groupes époxy du composé (C1))/(fonctions anhydride du composé (C2))
compris entre 0,8 et 1,2.

Outre le PPS et la combinaison (C), les compositions selon l'invention peuvent encore contenir d'autres ingrédients dans des quantités qui ne sont pas préjudiciables aux propriétés de ces compositions. Ainsi, d'une manière générale, ces compositions peuvent contenir de 5 à 300 % du poids de PPS, de préférence de 10 à 200 % du poids de PPS, d'une ou plusieurs charges ou d'un ou plusieurs matériaux de renforcement tels que par exemple les fibres de verre, le talc, le carbonate de calcium, la silice, l'alumine, le mica, le silicate d'aluminium, le silicate de calcium, l'oxyde de magnésium, les poudres métalliques, la poudre de quartz, les billes de verre, les fibres de carbone, les fibres de titanate de potassium, le graphite, le noir de carbone, etc.; ces charges et ces matériaux de renforcement peuvent être traités en surface par des agents de couplage tels que par exemple les silanes et les titanates.

Comme il a été mentionné plus haut, l'invention vise à améliorer la résistance au choc de compositions à base de PPS en y incorporant la combinaison (C) par une méthode particulière. Cette méthode, qui est décrite ci-après, assure une dispersion homogène de fines particules de la combinaison (C) réticulée dans la matrice de PPS desdites compositions. Un autre aspect de l'invention réside donc dans le procédé de préparation de ces compositions.

Le procédé de préparation des compositions selon l'invention comprend le malaxage en fondu du mélange contenant le PPS (ainsi que les éventuels "additifs conventionnels" mentionnés plus haut) et les composés (C1) et (C2) de la combinaison (C). Selon l'invention, ce malaxage doit être effectué en incorporant au PPS, successivement et dans un ordre quelconque, chacun des composés (C1) et (C2) de la combinaison (C).

Le malaxage peut être effectué dans n'importe quel dispositif capable de porter le PPS à l'état fondu et de lui faire subir, dans cet état, un malaxage intensif. En général, ce malaxage peut être effectué indifféremment dans des malaxeurs discontinus ou continus du type externe ou du type interne, tels que ceux commercialisés par les firmes HAAKE, LOEDIGE, TROESTER, WEDCO, HENSCHEL, BANBURY, etc. Pour des raisons techniques et économiques, on préfère travailler dans des malaxeurs du type interne, en particulier dans des extrudeuses qui constituent une classe particulière de malaxeurs internes. Quoique ces extrudeuses puissent être des extrudeuses monovis, on préfère travailler dans des extrudeuses à deux vis s'engrenant mutuellement (vis jumelles) et tournant dans le même sens (double vis corotative). Des extrudeuses bien connues du type préféré ci-dessus sont par exemple celles mises sur le marché par la société Werner & Pfleiderer sous la dénomination ZSK 30.

Pour l'exécution pratique du procédé de préparation selon l'invention dans des extrudeuses, on équipe ces dernières d'une alimentation secondaire située à une distance déterminée de l'alimentation principale, le long du corps de l'extrudeuse. Cette distance peut se déterminer en tenant compte des enseignements ci-après, relatifs au temps (t) séparant l'incorporation du composé (C1) (respectivement (C2)) et l'incorporation du composé (C2)(respectivement (C1)) dans le PPS.

La température de malaxage est comprise en général entre 280 et 350°C, de préférence entre 290 et 330°C. Des températures trop basses ne permettent pas une fusion suffisante du PPS pour y disperser de manière homogène la combinaison (C). Des températures trop élevées peuvent entraîner une dégradation du PPS et/ou des composés (C1) et/ou (C2).

En ce qui concerne la quantité de combinaison (C) à incorporer dans le PPS, ainsi que les quantités respectives de composés (C1) et (C2), on se reportera aux définitions et limitations mentionnées plus haut en rapport avec les compositions elles-mêmes.

En ce qui concerne la manière dont les composés (C1) et (C2) sont incorporés dans le PPS, on peut opérer par exemple selon l'un des modes de réalisation pratique ci-après :
(V) incorporation du composé (C1) par mélange à sec avec le PPS, fusion et malaxage du mélange fondu (a) ainsi obtenu, incorporation du composé (C2) dans ce mélange (a) et malaxage du mélange fondu (aa) ainsi obtenu ;
(W) incorporation du composé (C1) par mélange à sec avec le PPS, fusion et malaxage du mélange fondu (a) ainsi obtenu, incorporation de PPS mélangé au composé (C2) dans ce mélange (a) et malaxage du mélange fondu (aa)' ainsi obtenu ;
(X) incorporation du composé (C2) par mélange à sec avec le PPS, fusion et malaxage du mélange fondu (b), ainsi obtenu, incorporation du composé (C1) dans ce mélange (b) et malaxage du mélange fondu (bb) ainsi obtenu ;
(Y) fusion du PPS et incorporation du composé (C1) dans le PPS fondu, malaxage du mélange fondu (c) ainsi obtenu, incorporation du composé (C2) dans ce mélange (c) et malaxage du mélange fondu (cc) ainsi obtenu ;
(Z) fusion du PPS et incorporation du composé (C2) dans le PPS fondu, malaxage du mélange fondu (d) ainsi obtenu, incorporation du composé (C1) dans ce mélange (d) et malaxage du mélange fondu (dd) ainsi obtenu.

Quoique chacun des modes de réalisation (V) à (X) conduise à des compositions présentant des propriétés intéressantes, les modes de réalisation (V) à (X) sont préférés, tout particulièrement le mode de réalisation (V), parce que conduisant à des compositions résistantes au choc dans lesquelles la combinaison (C) est dispersée de la manière la plus homogène dans la matrice de PPS avec une bonne adhérence à cette dernière.

Le temps (t) séparant l'incorporation du composé (C1) (respectivement (C2)) et l'incorporation du composé (C2) (respectivement (C1)) dans le PPS peut varier dans une large mesure. Il est fonction notamment de la capacité ou du débit du dispositif de malaxage, de la durée du malaxage, de la température du malaxage, des quantités respectives de PPS et de combinaison (C) dans le mélange et des quantités respectives de composés (C1) et (C2) dans la combinaison (C).

Le temps (t) optimal peut se déterminer en prenant en compte les indications ci-après.

Le composé (C2) (respectivement (C1)) est ajouté après un temps (t) suffisant pour permettre la dispersion homogène préalable du composé (C1) (respectivement (C2)) dans la matrice de PPS fondue. Par dispersion homogène, on entend une dispersion du composé (C1) (respectivement (C2)) sous forme de particules de diamètres ne dépassant généralement pas 10 µm, de préférence pas 5 µm, tout particulièrement compris entre 2 et 0,3 µm, uniformément réparties à travers la matrice de PPS. L'obtention de la dispersion homogène peut être appréciée par exemple :
- en examinant par microscopie électronique à balayage un échantillon moulé à partir du mélange de PPS et du composé (C1) (respectivement (C2)) préalablement refroidi et traité par un solvant approprié capable d'extraire le composé (C1) (respectivement (C2)) ;
- en mesurant le couple du dispositif de malaxage (cette opération se pratique le plus aisément sur un malaxeur interne discontinu) et en incorporant le composé (C2) (respectivement (C1)) au mélange de PPS et du composé (C1) (respectivement (C2) lorsque ce couple a atteint sa valeur minimum.

Un temps (t) trop court a généralement comme conséquence une réticulation prématurée de la combinaison (C) avec obtention d'une composition de morphologie irrégulière et comme conséquence une résistance au choc insuffisante. Un temps (t) trop long n'est pas économique et peut détériorer les compositions.

Ce qui précède implique que la détermination du temps (t) optimal puisse exiger quelques essais de routine préalable, tenant compte des facteurs qui l'influencent.

A titre d'exemple, avec les dispositifs de malaxage préférés selon l'invention (extrudeuses à double vis corotative opérant à environ 300°C à une vitesse de rotation comprise entre 100 et 300 tours par minute), l'alimentation principale (introduction du PPS et du composé (C1) (respectivement (C2)) et l'alimentation secondaire (introduction du composé (C2) (respectivement (C1)) sont disposées à une distance telle que le temps (t) mis par le mélange fondu pour cheminer de la première à la seconde est compris entre 10 secondes et 5 minutes, de préférence entre 15 secondes et 3 minutes.

Le procédé selon l'invention permet d'atteindre une bonne dispersion d'une phase élastomérique dans une matrice de PPS, avec une bonne cohésion interfaciale. Les compositions qui résultent du mélange selon l'invention présentent une souplesse grandement accrue par rapport au PPS seul.

Les compositions selon l'invention peuvent être transformées par les méthodes de moulage connues en objets injectés et en objets extrudés.

Les applications sont toutes celles pour lesquelles le PPS est utilisé, à savoir l'injection de pièces techniques avec dans ce cas, des propriétés de résistance aux chocs améliorées, ainsi que des caractéristiques acoustiques meilleures (atténuation du bruit, importante pour des pièces comme des cache-culasse pour automobile) ; l'extrusion de tubes, filaments, films, etc.

Les exemples suivants illustrent l'invention en faisant référence aux figures 1 à 4 annexées à la description. Les exemples 1R et 4R sont donnés à titre de comparaison.

La figure 1 est un diagramme illustrant l'évolution du couple (kg.m), en fonction du temps (minutes), du malaxeur discontinu HAAKE ayant servi au malaxage en fondu des compositions des exemples 1R (courbe I), 2 (courbe II) et 3 (courbe III).

La figure 2 reproduit une microphotographie, obtenue par microscope électronique à balayage (MEB), d'une surface de fracture d'un échantillon de la composition de l'exemple 1R.

La figure 3 reproduit une microphotographie, obtenue par MEB, d'une surface de fracture d'un échantillon de la composition de l'exemple 2.

La figure 4 reproduit une microphotographie, obtenue par MEB, d'une surface de fracture d'un échantillon de la composition de l'exemple 3.

### Exemple 1R

Cet exemple est donné à titre de comparaison.
80 parties en poids d'une poudre de PPS partiellement réticulé commercialisée par TOHPREN sous la dénomination T-4 sont mélangées à 20 parties en poids d'une combinaison (C) comprenant
38 parties en poids d'un terpolymère (composé (C1)) contenant
68 % en poids d'éthylène
30 % en poids d'acrylate d'éthyle
2 % en poids de méthacrylate de glycidyle (produit LOTADER AX8660 d'ATOCHEM)
et
62 parties en poids d'un terpolymère (composé (C2)) contenant
91,8 % en poids d'éthylène
4,9 % en poids d'acrylate de butyle
3,3 % en poids d'anhydride maléique.

Le PPS et les composés (C1) et (C2) sont introduits simultanément dans un malaxeur discontinu HAAKE conditionné à une température de 300°C et tournant à une vitesse de 64 tours/minute. Le malaxage est poursuivi pendant 6 minutes.

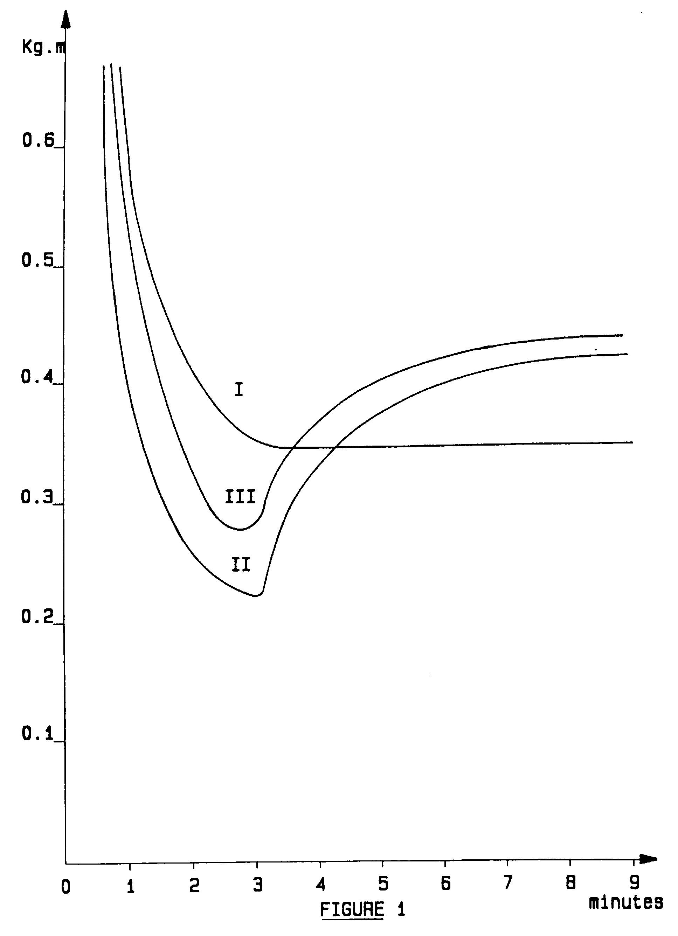

L'évolution du couple du malaxeur en fonction du temps est représentée par la courbe I du diagramme de la Figure 1. On n'observe aucune augmentation du couple pendant le malaxage.

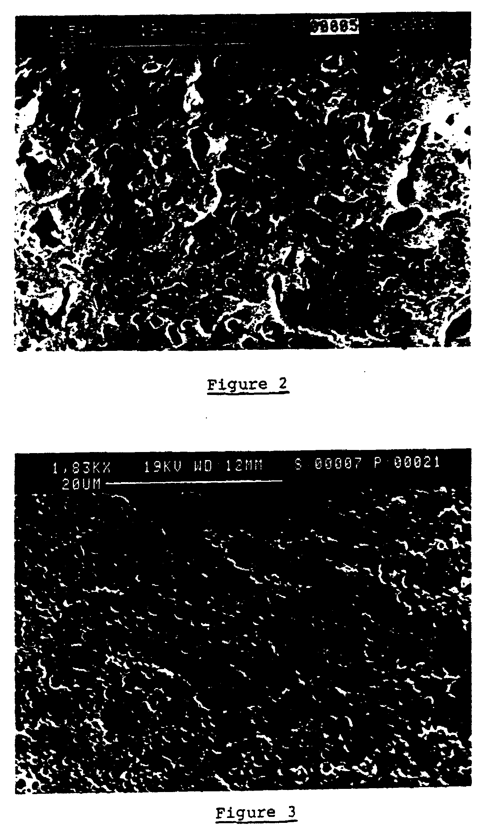

La morphologie de la composition obtenue est examinée par MEB (grossissement : 1540 fois) sur un échantillon dont la surface a été traitée au xylène et aux ultrasons. La microphotographie obtenue est représentée à la Figure 2. Cette figure montre que la morphologie de la composition obtenue est irrégulière (le réseau formé par la réticulation a été déchiqueté par cisaillement dans le malaxeur).

### Exemple 2

On procède comme à l'exemple 1R sauf que l'on introduit le composé (C2) dans le malaxeur 3 minutes après l'introduction du PPS et du composé (C1).

L'évolution du couple du malaxeur en fonction du temps est représentée par la courbe II du diagramme de la Figure 1. On observe une augmentation du couple dès l'introduction du composé (C2), augmentation imputable à la réticulation de la combinaison (C).

La morphologie de la composition obtenue est examinée par MEB (grossissement : 1830 fois) sur un échantillon dont la surface a été traitée au xylène et aux ultrasons. La microphotographie obtenue est représentée à la Figure 3. Cette figure montre que la morphologie de la composition obtenue est très régulière, les particules de la combinaison (C) dispersées dans la matrice de PPS présentant un diamètre moyen de 0,6 µm environ, étant réparties de manière homogène dans ladite matrice et adhérant bien à cette dernière. L'incorporation différée du composé (C2) a entraîné une réticulation (responsable de l'augmentation du couple du malaxeur) qui a stabilisé la morphologie de la composition.

### Exemple 3

On procède comme à l'exemple 1R sauf que l'on introduit le composé (C1) dans le malaxeur 3 minutes après l'introduction du PPS et du composé (C2).

L'évolution du couple du malaxeur en fonction du temps est représentée par la courbe III du diagramme de la Figure 1. On observe une augmentation du couple dès l'introduction du composé (C1), augmentation imputable à la réticulation de la combinaison (C).

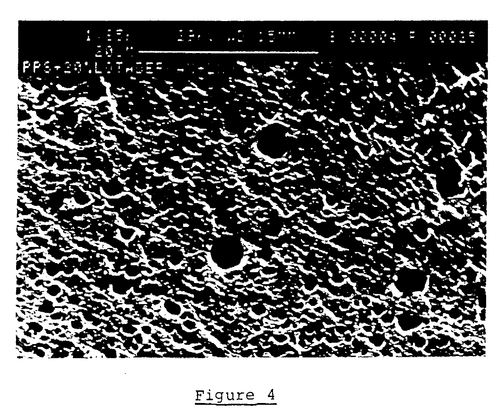

La morphologie de la composition obtenue est examinée par MEB (grossissement : 1850 fois) sur un échantillon dont la surface a été traitée au xylène et aux ultrasons. La microphotographie obtenue est représentée à la Figure 4. Cette figure montre que la morphologie de la composition obtenue est très régulière, les particules de la combinaison (C) dispersée dans la matrice de PPS présentant un diamètre moyen de 1 µm environ, étant réparties de manière homogène dans ladite matrice et adhérant bien à cette dernière. L'incorporation différée du composé (C1) a entraîné une réticulation (responsable de l'augmentation du couple du malaxeur) qui a stabilisé la morphologie de la composition.

### Exemple 4R et exemples 5 à 8

L'exemple 4R est donné à titre de comparaison.

Pour ces exemples, on utilise une extrudeuse bivis corotative commercialisée par WERNER & PFLEIDERER sous la dénomination ZSK 30 (rapport L/d=42), conditionnée à 300°C et dont la vitesse de rotation des vis est 300 tours/minute.

L'alimentation principale (A1) et l'alimentation secondaire (A2) de l'extrudeuse sont séparées par une distance correspondant à 10 d.

### Exemple 4R

L'extrudeuse est alimentée en A1 uniquement, par du PPS-T4 en poudre à un débit de 7 kg/heure

### Exemple 5

L'extrudeuse est alimentée :
* en A1 à un débit de 6,7 kg/heure par du PPS-T4 contenant 7,5 % en poids d'un terpolymère (composé (C2)) broyé contenant
   68 % en poids d'éthylène
   24 % en poids d'acrylate d'éthyle
   8 % en poids d'anhydride maléique (produit LOTADER L3700 d'ATOCHEM) ;
* et en A2 par le composé (C1) identifié à l'exemple 1R (produit LOTADER AX 8660 d'ATOCHEM)(débit : 0,172 kg/heure).

### Exemple 6

L'extrudeuse est alimentée :
* en A1, à un débit de 6,7 kg/heure, par du PPS-T4 contenant 15 % en poids du produit LOTADER L3700 ;
* et en A2, par le produit LOTADER AX 8660 (débit : 0,353 kg/heure)

### Exemple 7

L'extrudeuse est alimentée :
* en A1, à un débit de 6,7 kg/heure, par du PPS-T4 contenant 2,5 % en poids du produit LOTADER AX 8660 ;
* et en A2, par le produit LOTADER L3700 (débit : 0,543 kg/heure)

### Exemple 8

L'extrudeuse est alimentée :
* en A1, à un débit de 6,7 kg/heure, par du PPS-T4 contenant 5 % en poids du produit LOTADER AX 8660 ;
* et en A2, par le produit LOTADER L3700 (débit : 1,186 kg/heure).

### Exemple 9R (comparaison)

L'extrudeuse est alimentée :
* en A1 par du PPS-T4 contenant 22,1 % en poids de produit LOTADER AX 8660, à un débit de 5,5 kg/h ;
* en A2 par du PPS-T4 contenant 3,5 % en poids d'anhydride maléique (débit 0,5 kg/h).

Température d'extrusion : 300°C, à une vitesse de 250 tours/minute.

### Exemple 10R (comparaison)

L'extrudeuse est alimentée :
* en A1 par du PPS-T4 contenant 11,1 % en poids de produit LOTADER AX 8660, à un débit de 5,5 kg/h ;
* en A2 par du PPS-T4 contenant 3,5 % en poids d'anhydride maléique (débit 0,5 kg/h).

Température d'extrusion : 300°C, à une vitesse de 250 tours/minute.

Les conditions particulières et les résultats de ces exemples sont rassemblés dans le Tableau ci-après.

Dans ce tableau :
le test "Izod" de résistance au choc est mesuré selon la norme D 256-90b ;
l'allongement à la rupture : mesuré selon la norme ASTM D638 (conditions : 5 mm/sec à 23°C ; épaisseur des éprouvettes : 4 mm)

Les éprouvettes destinées à ces tests ont été obtenues par injection d'échantillons des compositions des exemples 4R à 8 sur une presse NESTAL 60.

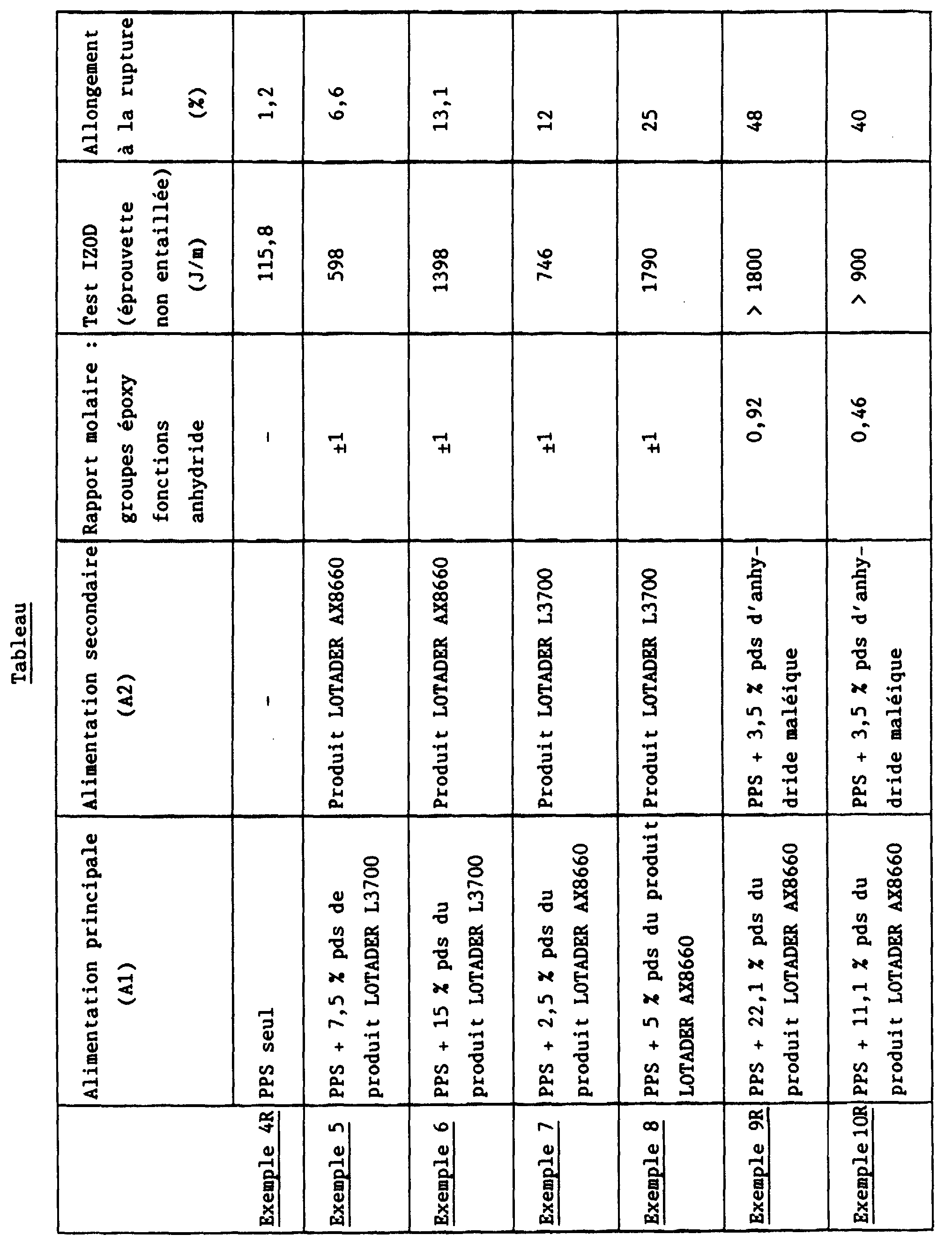

## Revendications

1. Compositions à base de polysulfure de phénylène contenant essentiellement 60 à 99,5 % en poids de polysulfure de phénylène et 0,5 à 40 % en poids d'une combinaison (C) contenant un copolymère élastomérique (C1) dérivé d'au moins une oléfine, d'au moins un comonomère (1) contenant au moins un groupe époxy et au moins un radical éthyléniquement insaturé, ainsi que d'un autre comonomère insaturé (2) copolymérisable avec les oléfines, qui est un alkylester d'acide carboxylique α,β-insaturé; et un agent de réticulation (C2) choisi parmi les copolymères d'oléfine, d'au moins un comonomère (3) choisi parmi les anhydrides dérivés des acides carboxyliques insaturés, et d'au moins un autre comonomère insaturé (2') choisi parmi les alkylesters d'acides carboxyliques α,β-insaturés, la quantité de composé (C2) étant suffisante pour réaliser une réticulation au moins partielle du composé (C1), c'est-à-dire un pontage entre les groupes époxy des macromolécules du composé (C1)

2. Compositions selon la revendication 1, caractérisées en ce que le comonomère (1) est un ester glycidylique d'acide carboxylique α,β-insaturé.

3. Compositions selon l'une quelconque des revendications 1 à 2, caractérisées en ce que les quantités de composés (C1) et (C2) présentes dans la combinaison (C) sont choisies de manière que le rapport molaire
(groupes époxy du composé (Cl))/(fonctions du composé (C2) susceptibles de réagir avec les groupes époxy du composé (C1)) soit compris entre 0,1 et 10.

4. Compositions selon l'une quelconque des revendications 1 à 3 caractérisée en ce que la composition (C) contient le produit de la réticulation d'un composé élastomérique (C1) contenant de 60 à 80 % en poids d'éthylène, de 1 à 15 % en poids de (méth)acrylate de glycidyle et au moins 15 % en poids d'acrylate d'alkyle en C₁₋₄ par un composé (C2) contenant de 65 à 95 % en poids d'éthylène, de 0,5 à 10 % en poids d'anhydride maléique et de 3 à 30 % en poids d'acrylate d'alkyle en C₁₋₄, les composés (C1) et (C2) ayant été mis en contact au rapport molaire (groupes époxy du composé (C1))/(fonctions anhydride du composé (C2))
compris entre 0,8 et 1,2.

5. Procédé pour la préparation des compositions selon l'une quelconque des revendications 1 à 5 comprenant le malaxage en fondu du mélange contenant le polysulfure de phénylène et les composés (C1) et (C2) de la combinaison (C), caractérisé en ce que ce malaxage est effectué en incorporant au polysulfure de phénylène, successivement et dans un ordre quelconque chacun des composés (C1) et (C2) de la combinaison (C).

6. Procédé selon la revendication 5, caractérisé en ce que le malaxage en fondu du mélange est effectué dans une extrudeuse à double vis corotative.

7. Procédé selon la revendication 5, caractérisé en ce qu'on incorpore le composé (C1) dans le polysulfure de phénylène par mélange à sec avec ce dernier, en ce qu'on fond et malaxe le mélange fondu (a) ainsi obtenu, en ce qu'on incorpore le composé (C2) dans ce mélange (a) et en ce qu'on malaxe le mélange fondu (aa) ainsi obtenu.

8. Procédé selon la revendication 5, caractérisé en ce que l'incorporation du composé (C2) au mélange contenant le polysulfure de phénylène et le composé (C1) est effectuée après dispersion homogène du composé (C1) dans la matrice fondue de polysulfure de phénylène.

9. Procédé selon la revendication 5, caractérisé en ce que l'incorporation du composé (C1) au mélange contenant le polysulfure de phénylène et le composé (C2) est effectuée après dispersion homogène du composé (C2) dans la matrice fondue de polysulfure de phénylène.

10. Procédé selon la revendication 8, caractérisé en ce que l'incorporation du composé (C2) au mélange contenant le polysulfure de phénylène et le composé (C1) est effectuée après fusion du mélange (a) résultant de la dispersion homogène du composé (C1) dans la matrice fondue de polysulfure de phénylène et granulation de ce mélange (a).

11. Procédé selon la revendication 9, caractérisé en ce que l'incorporation du composé (C1) au mélange contenant le polysulfure de phénylène et le composé (C2) est effectuée après fusion du mélange (a) résultant de la dispersion homogène du composé (C2) dans la matrice fondue de polysulfure de phénylène et granulation de ce mélange (a).

12. Procédé selon la revendication 5, dans lequel on incorpore le composé (C1) dans le polysulfure de phénylène par mélange à sec avec ce dernier, on fond et malaxe le mélange fondu (a) ainsi obtenu, on incorpore à ce mélange (a) le composé (C2) mélangé à du PPS, et on malaxe le mélange fondu (aa)' ainsi obtenu.

## Patentansprüche

1. Zusammensetzungen auf der Basis von Polyphenylensulfid, die im wesentlichen 60 bis 99,5 Gew.-% Polyphenylensulfid und 0,5 bis 40 Gew.-% einer Zusammensetzung (C) enthalten, die ein Elastomercopolymer (C1), das von wenigstens einem Olefin, von wenigstens einem Comonomer (1), das wenigstens eine Epoxygruppe und wenigstens einen ethylenisch ungesättigten Rest enthält, sowie von einem anderen mit den Olefinen copolymerisierbaren ungesättigten Comonomer (2), das ein Alkylester einer α,β-ungesättigten Carbonsäure ist, abgeleitet ist, und ein Vemetzungsmittel (C2) enthält, das unter den Copolymeren von Olefin, von wenigstens einem Comonomer (3), das unter den von ungesättigten Carbonsäuren abgeleiteten Anhydriden ausgewählt ist, und von wenigstens einem anderen ungesättigten Comonomer (2'), das unter den Alkylestem von α,β-ungesättigten Carbonsäuren ausgewählt ist, ausgewählt ist, wobei die Menge an Verbindung (C2) ausreichend ist, um eine wenigstens teilweise Vernetzung der Verbindung (C1), das heißt eine Verbrückung zwischen den Epoxygruppen der Makromoleküle der Verbindung (C1), zu erreichen.

2. Zusammensetzungen gemäß Anspruch 1, dadurch gekennzeichnet, daß das Comonomer (1) ein Glycidylester einer α,β-ungesättigten Carbonsäure ist.

3. Zusammensetzungen gemäß einem der Ansprüche 1 bis 2, dadurch geennzeichnet, daß die Mengen an Verbindungen (C1) und (C2), die in der Zusammensetzung (C) vorhanden sind, so ausgewählt sind, daß das Molverhältnis (Epoxygruppen der Verbindung (C1)) / (Funktionen der Verbindung (C2), die mit den Epoxygruppen der Verbindung (C1) reagieren können) zwischen 0,1 und 10 liegt.

4. Zusammensetzungen gemäß einem der Ansprüche 1 bis 3, dadurch gekennzeichnet, daß die Zusammensetzung (C) das Produkt der Vemetzung einer Elastomerverbindung (C1), die 60 bis 80 Gew.-% Ethylen, 1 bis 15 Gew.-% Glycidyl(meth)acrylat und wenigstens 15 Gew.-% C₁₋₄-Alkylacrylat enthält, durch eine Verbindung (C2), die 65 bis 95 Gew.-% Ethylen, 0,5 bis 10 Gew.-% Maleinsäureanhydrid und 3 bis 30 Gew.-% C₁₋₄-Alkylacrylat enthält, ist, wobei die Verbindungen (C1) und (C2) im Molverhältnis (Epoxygruppen der Verbindung (C1)) / (Anhydridfunktionen der Verbindung (C2)) zwischen 0,8 und 1,2 in Kontakt gebracht wurden.

5. Verfahren zur Herstellung der Zusammensetzungen gemäß einem der Ansprüche 1 bis 4, das das Kneten in der Schmelze des Gemischs umfaßt, das das Polyphenylensulfid und die Verbindungen (C1) und (C2) der Zusammensetzung (C) enthält, dadurch gekennzeichnet, daß dieses Kneten ausgeführt wird, indem man dem Polyphenylensulfid nacheinander und in einer beliebigen Reihenfolge jede der Verbindungen (C1) und (C2) der Zusammensetzung (C) zusetzt.

6. Verfahren gemäß Anspruch 5, dadurch gekennzeichnet, daß das Kneten des Gemischs in der Schmelze in einem Extruder mit gleichdrehender Doppelschnecke ausgeführt wird.

7. Verfahren gemäß Anspruch 5, dadurch gekennzeichnet, daß man die Verbindung (C1) dem Polyphenylensulfid durch trockenes Vermischen mit diesem letzteren zusetzt, dadurch, daß man schmelzen läßt und das so erhaltene geschmolzene Gemisch (a) knetet, dadurch, daß man die Verbindung (C2) diesem Gemisch (a) zusetzt, und dadurch. daß man das so erhaltene geschmolzene Gemisch (aa) knetet.

8. Verfahren gemäß Anspruch 5, dadurch gekennzeichnet, daß das Zusetzen der Verbindung (C2) zu dem Gemisch, das das Polyphenylensulfid und die Verbindung (C1) enthält, nach homogener Dispersion der Verbindung (C1) in der geschmolzenen Polyphenylensulfid-Matrix ausgeführt wird.

9. Verfahren gemäß Anspruch 5, dadurch gekennzeichnet, daß das Zusetzen der Verbindung (C1) zu dem Gemisch, das das Polyphenylensulfid und die Verbindung (C2) enthält, nach homogener Dispersion der Verbindung (C2) in der geschmolzenen Polyphenylensulfid-Matrix ausgeführt wird.

10. Verfahren gemäß Anspruch 8, dadurch gekennzeichnet, daß das Zusetzen der Verbindung (C2) zu dem Gemisch, das das Polyphenylensulfid und die Verbindung (C1) enthält, nach Schmelzen des Gemischs (a), das aus der homogenen Dispersion der Verbindung (C1) in der geschmolzenen Polyphenylensulfid-Matrix resultiert, und Granulieren dieses Gemischs (a) ausgeführt wird.

11. Verfahren gemäß Anspruch 9, dadurch gekennzeichnet, daß das Zusetzen der Verbindung (C1) zu dem Gemisch, das das Polyphenylensulfid und die Verbindung (C2) enthält, nach Schmelzen des Gemischs (a), das aus der homogenen Dispersion der Verbindung (C2) in der geschmolzenen Polyphenylensulfid-Matrix resultiert, und Granulieren dieses Gemischs (a) ausgeführt wird.

12. Verfahren gemäß Anspruch 5, bei dem man die Verbindung (C1) dem Polyphenylensulfid durch trockenes Vermischen mit diesem letzteren zusetzt, man schmelzen läßt und das so erhaltene geschmolzene Gemisch (a) knetet, man zu diesem Gemisch (a) die mit PPS gemischte Verbindung (C2) zusetzt und man das so erhaltene geschmolzene Gemisch (aa)' knetet.

## Claims

1. Compositions based on poly(phenylene sulphide) essentially comprising 60 to 99.5% by weight of poly(phenylene sulphide) and 0.5 to 40% by weight of a combination (C) comprising an elastomeric copolymer (C1) derived from at least one olefin, from at least one comonomer (1) comprising at least one epoxy group and at least one ethylenically unsaturated radical, and from another unsaturated comonomer (2) copolymerizable with the olefins, which is an alkyl ester of α,β-unsaturated carboxylic acid, and a crosslinking agent (C2) chosen from copolymers of olefin, of at least one comonomer (3) chosen from anhydrides derived from unsaturated carboxylic acids, and of at least one other unsaturated comonomer (2') chosen from alkyl esters of α,β-unsaturated carboxylic acids, the amount of compound (C2) being sufficient to carry out at least partial crosslinking ofthe compound (C1), that is to say, bridging between the epoxy groups of the macromolecules of the compound (C1).

2. Compositions according to Claim 1, characterized in that the comonomer (1) is a glycidyl ester of α,β-unsaturated carboxylic acid.

3. Compositions according to either one of Claims 1 and 2, characterized in that the amounts of compounds (C1) and (C2) present in the combination (C) are chosen so that the molar ratio (epoxy groups of the compound (C1))/(functional groups of the compound (C2) capable of reacting with the epoxy groups of the compound (C1)) is between 0.1 and 10.

4. Compositions according to any one of Claims 1 to 3, characterized in that the composition (C) comprises the product from the crosslinking of an elastomeric compound (C1) comprising from 60 to 80% by weight of ethylene, from 1 to 15% by weight of glycidyl (meth)acrylate and at least 15% by weight of C₁₋₄ alkyl acrylate with a compound (C2) comprising from 65 to 95% by weight of ethylene, from 0.5 to 10% by weight of maleic anhydride and from 3 to 30% by weight of C₁₋₄ alkyl acrylate, the compounds (C1) and (C2) having been brought into contact at the molar ratio (epoxy groups of the compound (C1))/(anhydride functional groups of the compound (C2)) of between 0.8 and 1.2.

5. Process for the preparation of the compositions according to any one of Claims 1 to 4 comprising the melt kneading of the blend comprising the poly(phenylene sulphide) and the compounds (C1) and (C2) ofthe combination (C), characterized in that this kneading is carried out by incorporating in the poly(phenylene sulphide), successively and in any order, each of the compounds (C1) and (C2) ofthe combination (C).

6. Process according to Claim 5, characterized in that the melt kneading of the blend is carried out in a twin-screw corotating extruder.

7. Process according to Claim 5, characterized in that the compound (C1) is incorporated in the poly(phenylene sulphide) by dry blending with the latter, in that melting is carried out and the molten blend (a) thus obtained is kneaded, in that the compound (C2) is incorporated in this blend (a) and in that the molten blend (aa) thus obtained is kneaded.

8. Process according to Claim 5, characterized in that the incorporation of the compound (C2) in the blend comprising the poly(phenylene sulphide) and the compound (C1) is carried out after homogeneous dispersion of the compound (C1) in the molten poly(phenylene sulphide) matrix.

9. Process according to Claim 5, characterized in that the incorporation of the compound (C1) in the blend comprising the poly(phenylene sulphide) and the compound (C2) is carried out after homogeneous dispersion of the compound (C2) in the molten poly(phenylene sulphide) matrix.

10. Process according to Claim 8, characterized in that the incorporation of the compound (C2) in the blend comprising the poly(phenylene sulphide) and the compound (C1) is carried out after melting of the blend (a) resulting from the homogeneous dispersion of the compound (C1) in the molten poly(phenylene sulphide) matrix and granulation of this blend (a).

11. Process according to Claim 9, characterized in that the incorporation of the compound (C1) in the blend comprising the poly(phenylene sulphide) and the compound (C2) is carried out after melting of the blend (a) resulting from the homogeneous dispersion of the compound (C2) in the molten poly(phenylene sulphide) matrix and granulation of this blend (a).

12. Process according to Claim 5, in which the compound (C1) is incorporated in the poly(phenylene sulphide) by dry blending with the latter, melting is carried out and the molten blend (a) thus obtained is kneaded, the compound (C2), blended with PPS, is incorporated in this blend (a) and the molten blend (aa)' thus obtained is kneaded.
